# EUROPEAN PATENT APPLICATION

(11) **EP 2 822 225 A1**
(43) Date of publication of application: **07.01.2015**
(21) Application number: 13305953.5
(22) Date of filing: 05.07.2013
(51) Int. Cl.: H04L 12/28, G08B 21/04, G08B 21/22

(54) **A method and a server for home automation**

(71) Applicant: ALCATEL LUCENT, 92100 Boulogne-Billancourt (FR)
(72) Inventor: Rähmer, Silke, 70435 Stuttgart (DE); Kopp, Dieter, 70435 Stuttgart (DE)
(74) Representative: Kröhnert, Michael

(57) **Abstract**

The invention concerns a method of
- receiving (201) presence sensing information,
- receiving (201) device consumption information,
- correlating (203) device consumption information with a predetermined target consumption to determine the content of a message, and
- determining (204) an addressee of the message depending on the result of the correlation and the presence sensing information.

The invention concerns a corresponding server as well.

## Description

### Field of the invention

The invention relates to a method and a server for home automation.

### Background

In an implementation capable of home automation, devices such as home appliances or electronic devices are monitored and controlled automatically. Interfaces using telecommunication networks exist to report the current state of individual devices and to control the set points for the control remotely.

However, remote reporting and remote set point control is sometimes not sufficient, particularly when devices are faulty or in abnormal state.

### Summary

The object of the invention is thus to enhance home automation for a more robust and secure home environment.

The main idea of the invention is a method comprising
- receiving presence sensing information,
- receiving device consumption information,
- correlating device consumption information with a predetermined target consumption to determine the content of a message, and
- determining an addressee of the message depending on the result of the correlation and the presence sensing information.

This way not only the content of the reporting message but also the best addressee, i.e. person or authority, is determined in a reliable way for individual situations.

Advantageously further device consumption information is received, and the target consumption depending on the further device consumption information is determined. This improves the robustness and avoids false detections of critical situations.

Advantageously the presence sensing information is compared to a predetermined presence pattern, and the addressee is selected from predetermined addressees depending on the result of the comparison. This improves robustness of the determination of the addressee.

Advantageously the message is sent to a predetermined device depending on the addressee. This enhances proper delivery of the message to the identified person.

Advantageously the message is only sent when a variable indicative of the correlation exceeds a predetermined threshold. This reduces false alarms.

Advantageously the variable is indicative of the difference between the value of the predetermined target consumption and the value of the device consumption, and the predetermined threshold is indicative of a predetermined difference value. This way unusual consumption behavior, such as current or voltage spikes or sudden water leaks are detected easily.

Advantageously the variable is indicative of the time for that the predetermined target consumption and the device consumption differ, and the predetermined threshold is indicative of a predetermined time period. This way long term effects, such as accidentally plugged electric iron, devices accidentally in standby mode, devices with leakage current or water leaks in supply lines are detected.

The invention relates also to the respective server, comprising
- a receiver adapted to receive presence sensing information and device consumption information,
- a processor adapted to correlate device consumption information with a predetermined target consumption to determine the content of a message, and to determine an addressee of the message depending on the result of the correlation and the presence sensing information.

Further developments of the invention can be gathered from dependent claims and the following description.

### Brief description of the figures

In the following the invention will be explained further making reference to the attached drawings.
Fig. 1 schematically shows a first part of a home automation system.
Fig. 2 schematically shows a flowchart of part of a method for home automation.
Fig. 3 schematically shows a schematic diagram of device consumption.
Fig. 4 schematically shows a schematic pattern of device consumption.

### Description of the embodiments

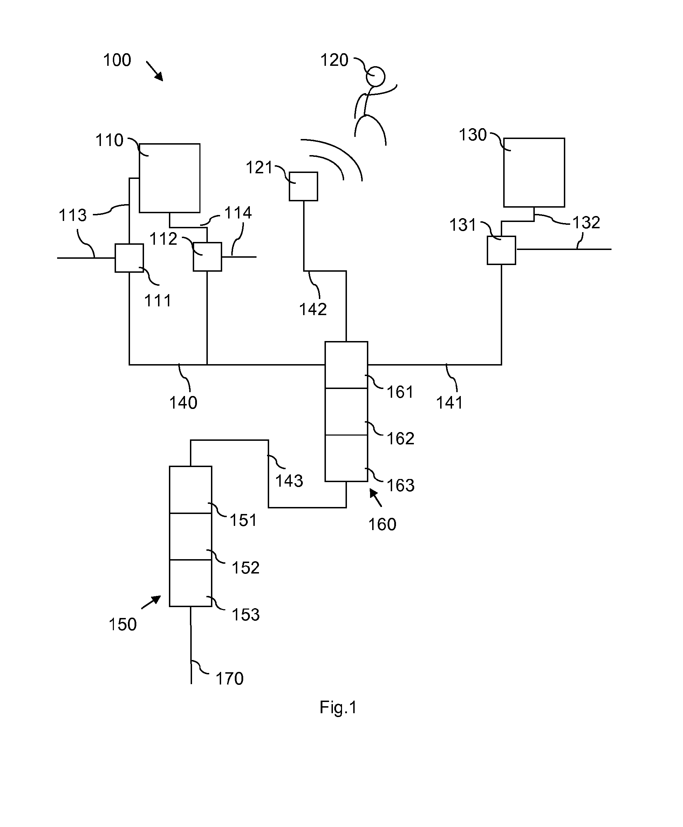

Figure 1 shows a part of a home automation system 100.

The home automation system comprises of devices, supply lines and data links. Exemplary for the many devices a washing machine 110 and a toaster 130 are depicted in Figure 1. Other examples may be lights, entertainment electronics like television or automated roller shutter.

The washing machine 110 is connected via a water supply line 113 comprising an interconnecting water meter 111 and a power supply line 114 comprising an interconnecting electric meter 112.

The toaster 130 is connected via a power supply line 132 comprising an interconnecting electric meter 131.

Furthermore the home automation system comprises a presence sensing unit 121, adapted to determine presence sensing information. In particular the presence sensing unit 121 may be a microwave motion detector. Several presence sensing units 121 may be interconnected, e.g. to monitor several rooms of a home. Additionally information about the presence of persons may be derived by other means, for example by registering the presence of an electronic remote control of a keyless entry system or a handheld communication device like a smart phone. In a robust environment the presence and identity of the person may be determined from a login. In that case the person may log into the home automation system 100 by a control panel, e.g. a touch screen, of the sensing unit 121.

The electric meters 112, 131 and the water meter 111 are in the example smart meters. The smart meters and the sensing unit 121 comprise senders adapted to send information device consumption and presence sensing information respectively.

The smart meters 111, 112, 131 are in the example adapted to measure the device consumption, e.g. the flow of water or electricity to the device respectively.

In the example the meters and the presence sending unit 121 are connected via data links 140, 141, 142 to a control center 160. The control center 160 is located in the home. The communication on the data links 140, 141, 142 is for example a near field communication in the home according to the well known ZigBee standard. Alternatively or additionally any other data connection, such as the well known wireless local area connection according to IEEE 802.11n may be used.

The control center 160 is connectable via data link 143 to a server 150 that may be located in the home as well or preferably is located at a remote location. The first case the connection in the home may still be near field connections. In that case the control center 160 and the server 150 may be the same device.

In the second case the connection between the control center 160 and the server 150 may be a wide area connection (well known as WAN).

Said connections are for example according to the well known ZigBee protocol for near field or the well known internet protocol (IP), user datagram protocol (UDP), transmission control protocol (TCP) or stream control transmission protocol (SCTP). Signaling may be according to the well known ZigBee standard for near field as well or the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers (URI).

The connection can but must not be directly between the devices. The typical use for the connection to the server 150 is on wide area networks with multiple intermediate devices.

The control center 160 comprises a receiver 161 adapted to receive presence sensing information and device consumption information. The receiver 161 is adapted to operate using the protocols and connections described above. The receiver 161 is adapted to receive further device consumption information.

The server 160 comprises a processor 162 adapted to sample monitoring data from the connected smart meters 111, 112, 131 and the presence sensing unit 121 and to generate report messages, e.g. every 10 seconds or whenever new sensor data is received.

The server 160 comprises a sender 163 adapted to send the report messages at predetermined time intervals, e.g. every 10 seconds, or whenever new report messages are generated by the processor.

The sender 163 is in the example adapted to send the report message to server 150.

The server 150 comprises of a receiver 151, adapted to receive the report messages. This means that the receiver 151 is adapted to receive presence sensing information and device consumption information. The receiver 151 is adapted to operate using the protocols and connections described above. The receiver 151 is adapted to receive further device consumption information in further report messages as well.

The server 150 comprises a processor 152 adapted to correlate device consumption information with a predetermined target consumption to determine the content of a message, and to determine an addressee of the message depending on the result of the correlation and the presence sensing information. The processor 152 is adapted to determine the target consumption depending on the further device consumption information.

The processor 152 is furthermore adapted to compare the presence sensing information to a predetermined presence pattern, and to select the addressee from predetermined addressees depending on the result of the comparison.

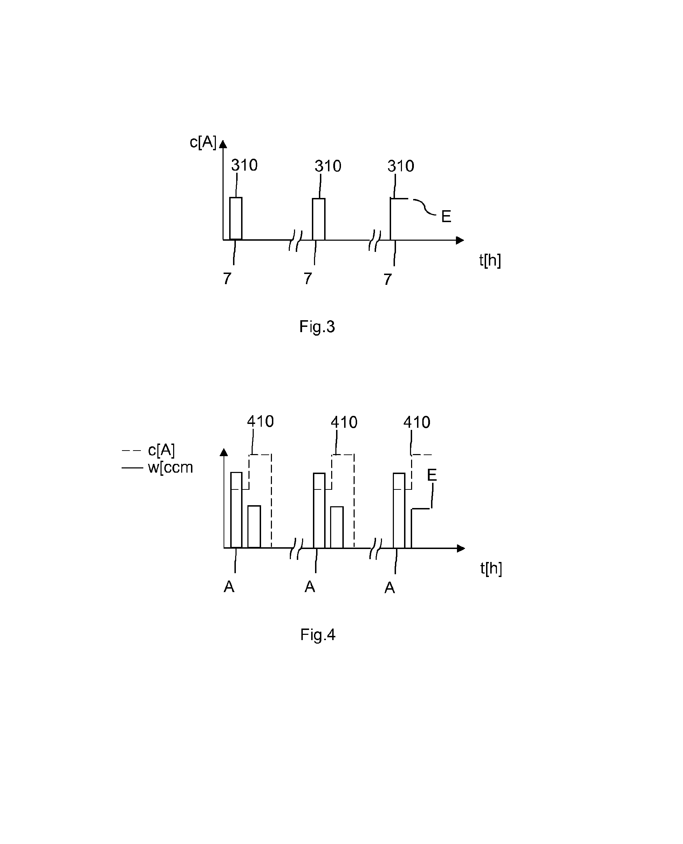

Such pattern is for example depicted in figures 3 and 4 as consumption of the washing machine 110 and the toaster 130 respectively.

In figure 3, in a schematic diagram, current c in Ampere is depicted over time t in hours for the use of the toaster 130. The use of the toaster in this example occurs around 7 a.m. every day. This is depicted as small rectangular current impulses 310 occurring around 7 a.m. every day. According to the example, the current impulse 310 repeats itself almost identically at around the same time. However the rightmost current impulse at point "E" didn't end at the same time the previous current impulses ended. The processor 152 is in this case adapted to correlate the current consumption pattern 310 as device consumption information to a previous consumption pattern 310 of previous toaster usage as predetermined target consumption. In the example at point "E" in the rightmost current impulse 310 processor 152 detects by correlation a deviation between the consumption patterns 310.

In figure 4, in a schematic diagram, current c in Ampere and water consumption w in ccm are depicted over time in hours as dashed and solid lines respectively.

Almost the same consumption pattern 410 is repeated for water and current consumption respectively every time a washing program A is repeated on different days. However, in the rightmost pattern 410 as depicted with the solid line at point "E", the water consumption didn't end at the same time the previous water consumption stopped. The processor 152 is in this case adapted to correlate the current consumption pattern 410 as device consumption information to a previous consumption pattern 410 of previous washing cycles as predetermined target consumption. In the example at point "E" in the rightmost consumption pattern 410 the processor 152 detects by correlation a deviation between the consumption patterns 410.

Following this principle the processor 152 may be adapted to monitor or correlate:
- the leakage flow for detection, e.g. of gas, water, electric power leaks,
- the device consumption with the meter reading,
- the device behavior, to determine if the consumption diagram is in line with reference data for the device,
- the device dependent medium correlation (water, power on washing machine, laundry dryer),
- the presence of a person and the consumption (e.g. at cooking stove), e.g. in a presence pattern,
- applying defined rules of information correlation and related actions,
- applying defined rules for selection of addressee.

The addressee is for example the home owner or his/her significant other or an authority such as the fire or police department or the utility provider.

The addressee is selected from predetermined addressees. In the example this predetermined addressee is linked to a predetermined device. For example a device is registered previously to the addressee by means of storing the address of the device linked to the name of the addressee. Instead of names other means of identification such as an identification number may be used.

In a preferred example the home owner's home phone number and the smart phone number are used as device addresses for the home owner as addressee. According to this example the utility provider's power grid control center IP address and the IP address of the control panel of a fire alarm system are used for the utility provider and the fire department as addressee.

Furthermore the server 150 comprises a sender 153 adapted to send the message to the predetermined device depending on the addressee.

Optionally the smart meters 111, 112, 131 comprise actuators adapted to control the flow through the respective supply lines 113, 114, 132. In this example the data links 140, 141, 142 and the sender 153 are connected and adapted to send the respective control commands. For example the water meter 111 comprises a valve adapted to control the flow of water through the water supply line 113. Likewise the electric meters 112, 131 comprise switches for connecting or disconnecting from the power supply.

In this optional embodiment the sender 153 is adapted to send the message to the smart meters 111, 112, 131 as addressee.

The server 150 furthermore comprises a data storage not depicted in figure 1 adapted to store information about the predetermined device, the predetermined presence pattern or the target consumption.

In this example for correlating, rules are defined depending on error types and presence information of the home owner.

This means, that the control center 160 reports to the server 150. The server 150 is adapted to provide protection and to analyze the data to detect an error/event. Furthermore the server 150 is adapted to inform the home owner e.g. via SMS on their mobile phone, etc. This split allows for low cost low power hardware in the control center 160 and to optimally use scalable high performance hardware on the server 150 to adapt to the need.

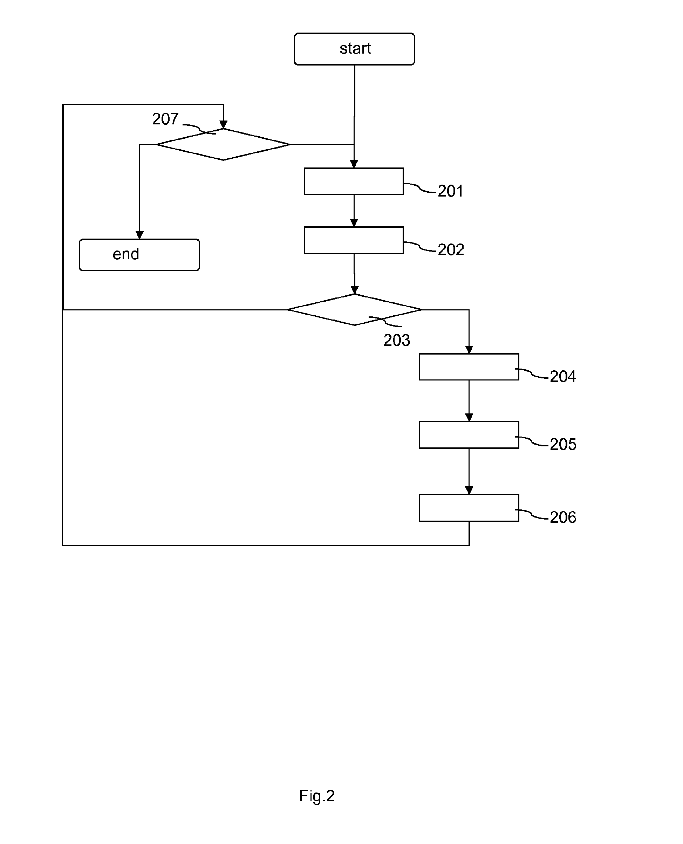

A corresponding method is explained below making reference to figure 2.

The method starts for example whenever a report message is received. After the start a step 201 is executed.

In step 201, presence sensing information is received and device consumption information is received from the report message. This means that for the example of the washing machine 110 or the toaster 130 the report message comprises information about the current power consumption in c in Ampere and the presence of the home owner, e.g. the name or identification in a string. An empty string in this example means no person present.

Afterwards optional step 202 is executed.

In optional step 202 further device consumption information is received and the target consumption is determined depending on the further device consumption information. In case of the washing machine example the further device consumption information is the water consumption from the water meter 111.

Other further information may be smoke, carbon monoxide or gas detector information, e.g. a Boolean value of TRUE for detected smoke, carbon monoxide or gas and FALSE in case no smoke, carbon monoxide or gas is detected.

Afterwards a step 203 is executed.

In step 203 a test is performed to determine whether to send the message or not. In case the message is to be sent a step 204 is executed. Otherwise step 207 is executed.

The simplest implementation is to send the message whenever it is determined. This will inform the addressee immediately.

Preferably the message is only sent when a variable indicative of the correlation exceeds a predetermined threshold. There may be two alternative or complementary ways of correlating:
- the variable may be indicative of the difference between the value of the predetermined target consumption and the value of the device consumption. In this case the predetermined threshold is indicative of a predetermined difference value. For example the difference value is a current or water consumption threshold in Ampere or ccm respectively. This way a sudden short circuit or a leak of a burst water supply tube may be detected. In the example of the figures 3 or 4 the predetermined threshold value may be Zero at the point "E". Then upon receiving the indication that the difference value is not equal to Zero, the threshold is exceeded and the message must be sent;
- the variable may be indicative of the time for that the predetermined target consumption and the device consumption differ, and the predetermined threshold is indicative of a predetermined time period. The time period may be for example in the range of one to ten minutes. In the example of figure 3 or 4 this corresponds to the position of point "E" regarding the time axis. This means that the threshold is exceeded and the message must be sent.

When combining the two criteria, depending on device characteristics or user preference, the message may be sent either when both conditions are satisfied or in case only one of them is satisfied.

This way it may be detected when a toaster is not turning off properly or an electric iron has not been switched off.

The content of the message is for example the result of the correlation, i.e. the information about the variable and threshold.

This means that the device consumption information is correlated with the predetermined target consumption to determine the content of the message.

Afterwards a step 204 is executed.

In step 204 the addressee of the message is determined depending on the result of the correlation and the presence sensing information.

This means that in case an error is detected, depending on the error, the addressee is determined.

In case the further information indicates with a value TRUE that smoke, carbon monoxide or gas is detected, the addressee is for example the home owner and the fire department.

In case the error/event indicates a small leak or uncritical electronic device malfunction, the addressee is for example the home owner only.

The presence sensing information may be used in particular for critical device malfunctions to determine the addressees. For example when detecting malfunctions of electrical devices that may lead to fire, gas or severe water leaks that may lead to flooded rooms in short times, the home owner and the fire department may be the addressee.

This means that the addressee is selected from predetermined addressees.

Optionally the presence sensing information may be compared to a predetermined presence pattern, and the addressee is selected from predetermined addressees depending on the result of the comparison. For example if the presence pattern indicates that the person is not present but the predetermined presence pattern indicates that the person owning the home is usually present at the current day and time, the addressee is selected to be the person owning the house.

Afterwards an optional step 205 is executed.

The optional step 205 comprises determining control commands for the smart meters 111, 112, 131 for example to interrupt the power supply or the water to the device by switching or closing the valve respectively. The control commands are for example determined from the result of the correlation as well. In case of malfunction, as default the control command is to disconnect the electronic device or close the respective valve of the water supply.

Afterwards a step 206 is executed.

In step 206 the message is sent to the predetermined device depending on the addressee. To that end the device linked to the addressee is determined. For example the IP address is used to address the message. Optionally the control commands are included in the message.

Afterwards step 207 is executed.

In step 207 a test is performed to determine whether to end the method or not. The method ends for example whenever it is detected that the control center 160 is switched off. The control center 160 may send a corresponding termination signal or the detection recognizes the lack of report messages in a predetermined amount of time, e.g. for one hour.

In that case the method ends. Otherwise step 201 is executed.

In an further example depending on the type of detected error the home owner will be asked to either
- fix the detected error/event within a specified time, e.g.
   between 10 to 30 minutes,
- in case the detected error/event is not fixed by owner a shutdown is forced
- in case a shutdown not possible, additional facts are examined, such as smoke, carbon monoxide and gas detectors.
- upon a reasonable suspicions of fire the fire department and / or the police will be alerted.
- additionally or optionally the owner will be informed about all actions, e.g. via SMS.

To that end the addressee is determined to be the home owner first and then after the time of 10 to 30 minutes has lapsed or additional information indicating fire is received, the addressee is changed to the fire or police department. To that end a time counter monitoring is started during the method and a change of addressee is triggered if the error/event is not resolved before the time counter exceeds a predetermined time threshold.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

## Claims

1. A method **comprising**
- receiving (201) presence sensing information,
- receiving (201) device consumption information,
- correlating (203) device consumption information with a predetermined target consumption to determine the content of a message, and
- determining (204) an addressee of the message depending on the result of the correlation and the presence sensing information.

2. The method according to claim 1, comprising receiving (202) further device consumption information, and determining the target consumption depending on the further device consumption information.

3. The method according to any of aforementioned claims, comprising comparing (204) the presence sensing information to a predetermined presence pattern, and selecting (204) the addressee from predetermined addressees depending on the result of the comparison.

4. The method according to any of aforementioned claims,
wherein the message is sent (206) to a predetermined device depending on the addressee.

5. The method according to any of aforementioned claims,
wherein the message is only sent (203, 206) when a variable indicative of the correlation exceeds a predetermined threshold.

6. The method according to claim 5, wherein the variable is indicative of the difference between the value of the predetermined target consumption and the value of the device consumption, and the predetermined threshold is indicative of a predetermined difference value.

7. The method according to claim 5, wherein the variable is indicative of the time for that the predetermined target consumption and the device consumption differ, and the predetermined threshold is indicative of a predetermined time period.

8. A server (150, 160) **comprising**
- a receiver (151, 161) adapted to receive (201) presence sensing information and device consumption information,
- a processor (152, 162) adapted to correlate (203) device consumption information with a predetermined target consumption to determine the content of a message, and to determine (204) an addressee of the message depending on the result of the correlation and the presence sensing information.

9. The server (150, 160) according to claim 8, wherein the receiver (151, 161) is adapted to receive (202) further device consumption information and the processor (152, 162) is adapted to determine the target consumption depending on the further device consumption information.

10. The server (150, 160) according to claims 8 or 9, wherein the processor is adapted to compare (204) the presence sensing information to a predetermined presence pattern, and to select the addressee from predetermined addressees depending on the result of the comparison.

11. The server (150, 160) according to claims 8 to 10, comprising a sender adapted to send (206) the message to a predetermined device depending on the addressee.

12. The server (150, 160) according to claim 8 to 11, comprising a data storage adapted to store information about a predetermined device, a predetermined presence pattern or a target consumption.
